# EUROPEAN PATENT APPLICATION

(11) **EP 1 717 126 A1**
(43) Date of publication of application: **02.11.2006**
(21) Application number: 05700473.1
(22) Date of filing: 24.01.2005
(51) Int. Cl.: B62B 11/00, B62M 1/00, A01K 1/00

(54) **CARRIER FOR PET OUTDOOR ACTIVITIES**

(30) Priority: 09.02.2004 CN 200410015306
(71) Applicant: CHEN, Jieru, Dongshan District, Guangzhou, Guangdong 510600 (CN)
(72) Inventor: CHEN, Jieru, Dongshan District, Guangzhou, Guangdong 510600 (CN)
(74) Representative: Rössig, Rolf
(86) International application number: PCT/CN2005/000100
(87) International publication number: WO 2005/077729

(57) **Abstract**

This invention relates to a kind of non-powered environment-protective sightseeing carriage for pets, which comprises compartment and wheels. The compartment includes floor, side boards and top cover. Vessels for food and water are provided in the compartment. There is a hole on the floor with a dropping tray under it. At least one side of side boards (12) is transparent. This invention satisfies need to take pets out for looking around with enjoyment. In addition, it has advantages that pets may relieve themselves inside the carriage so that have no effect on public sanitation and on other's health while pets have a comfortable space for their activities.

## Description

### Cross Reference to the Parent Patent Application

This patent application corresponds to the PCT patent application No. PCT/CN2005/000100, filed on Jan 24, 2005.

### CARRIER FOR PET OUTDOOR ACTIVITIES

### Field of Invention

This Invention relates to a kind of non-powered carriages, in particular, a kind of non-powered environment-protective sightseeing carriages for pets.

### Background of the Invention

Activities with pets in outdoor public places cause frequently unkind feeling from persons who do not like pets, and, sometimes, cause conflict between the owner and other people. In addition, pets relieve themselves outdoor anywhere and make adverse effect on public health.

### Summary of the Invention

The aim of this Invention is to provide a kind of non-powered environment-protective sightseeing carriages for pets that may satisfy the need to take pets out for sightseeing while no adverse effect on other persons and no public health problem caused.

The aim of this Invention is realized with following technical design.

A kind of non-powered environment-protective sightseeing carriages for pets comprises a compartment and wheels. The compartment has a floor, side boards and a top cover. Vessels for food and water are provided in the compartment. There is a hole on the floor with a dropping tray under it. At least one side of side boards is transparent. Further more, it has at least two wheels.

On base of above-mentioned design, further improvement is to make the top cover with transparent or non-transparent material. When the top cover is made of transparent material, a tent is provided over the top cover and a board can be put on floor of compartment and hole.

A kind of non-powered environment-protective sightseeing carriages for pets comprises a floor, side boards are located on the floor, the floor and side board defines a compartment, at least one of the side boards is transparent, a top cover is located on the tops of side boards, vessels for food and water are provided on the floor, the floor has a hole, a dropping tray is under it, there are at least two wheels under the floor, a handle is fixed with the floor, one of the side boards has a small door.

A kind of non-powered environment-protective sightseeing carriages for pets comprises a floor, side boards are located on the floor, the floor and side boards define a compartment, at least one of the side boards is transparent, a top cover is located on the tops of side boards, vessels for food and water are provide on the floor, the floor has a hole, a dropping tray is under the hole, the floor is connected with a moving device powered by foot, one of side boards 12 has a small door.

The carriage for pet of the present invention can be folded.

Based on the above-mentioned technical measures, the further improvement is that make a small door for pets pass in and out. The small door can be a single door opened or closed from side, or double doors opened or closed from middle, or a flood gate style door or turn style door. Three wheels can be fixed under the floor; the carriage for pet becomes a pushing carriage with three wheels. The top cover can be a stretching out and drawing back style or turning style. The handle 30 can be a stretching out and drawing back style or folding style.

The non-powered environment-protective sightseeing carriage for pets of the present invention is a carriage with three wheels powered by human foot. A floor and four side boards define a compartment, the side boards beside the carriage are transparent, pets inside the carriage can view the scene outside. The left side board has a small door, which can be single door for the pets pass in or out. A top cover is on the tops of the side boards, which can be turned down for shadow sunlight. There are vessels for food and water on the floor, the floor has a hole with a dropping tray under it for storing the dropping from pets temporarily.

This Invention satisfies the need to take pets out for out-door activities. In addition, it has advantages that pets may relieve themselves inside the carriage so that have no adverse effect on public health while pets have a comfortable space for their activities.

### Brief Description of Drawings

Fig. 1 is a structural schematic drawing of this Invention.
Fig. 2 is a schematic drawing of one embodiment for this Invention.
Fig. 3 is a right side view drawing of the carriage shown in the Fig. 2.
Fig. 4 is a schematic drawing of another embodiment for this Invention.
Fig. 5 is a left side view drawing of the carriage shown in the Fig. 4.
Fig. 6 is a schematic drawing of another embodiment for this Invention.
Fig. 7 is a schematic drawing of another embodiment for this Invention.
Fig. 8 is a schematic drawing of another embodiment for this invention.
Fig. 9 is a schematic drawing of another embodiment for this invention.
Fig. 10 is a schematic drawing of another embodiment for this invention.
Fig. 11 is a schematic drawing of another embodiment for this invention.

Where: 10: Compartment; 11:Floor; 12: Side Boards; 13: Top Cover; 14, 15: Vessels for food and water; 16: Hole; 17: Dropping Tray; 18: Top tent; 19: Flat Board; 20: Wheel; 30: handle; 40: foot power device; 50: storage battery

### Detail Description of the Invention

Further description of this invention will be made below with embodiments and drawings.

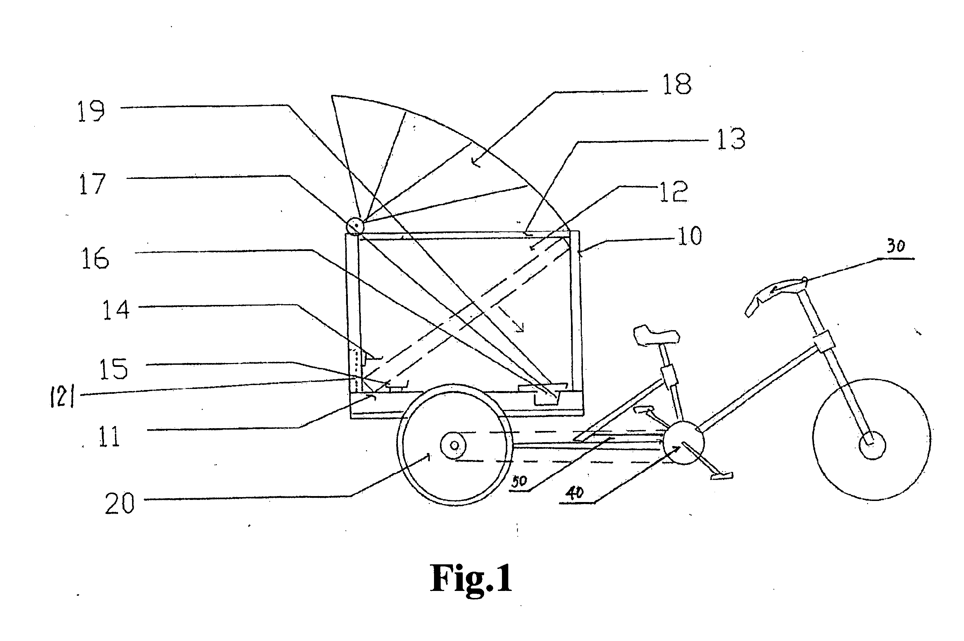

As shown in Fig. 1, the non-powered environment-protective sightseeing carriage for pets of this invention comprises a compartment 10 and wheels 20. The Compartment 10 has a floor 11, side boards 12 and a top cover 13 on top of the compartment 10. Two side boards 12 are transparent. Pets can stay in the compartment 10 and enjoy sightseeing and people may watch pets too. Vessels 14 and 15 for food and water are provided inside the compartment 10 to satisfy pet's need. There is a hole 16 on floor 11 with dropping tray 17 under it to keep pet's dropping. The top cover 13 on top of compartment 10 may overshadow of sunshine and ward off the rain. If the top cover 13 is transparent, a top tent 18 is added to ward off the sunshine. Back to home, remove vessels 14 and 15 and cover the hole 16 on floor 11 with a flat board 19 to make appearance handsome in a practical manner. There are at least two wheels 20 under compartment 10 to save labor and to facilitate moving.

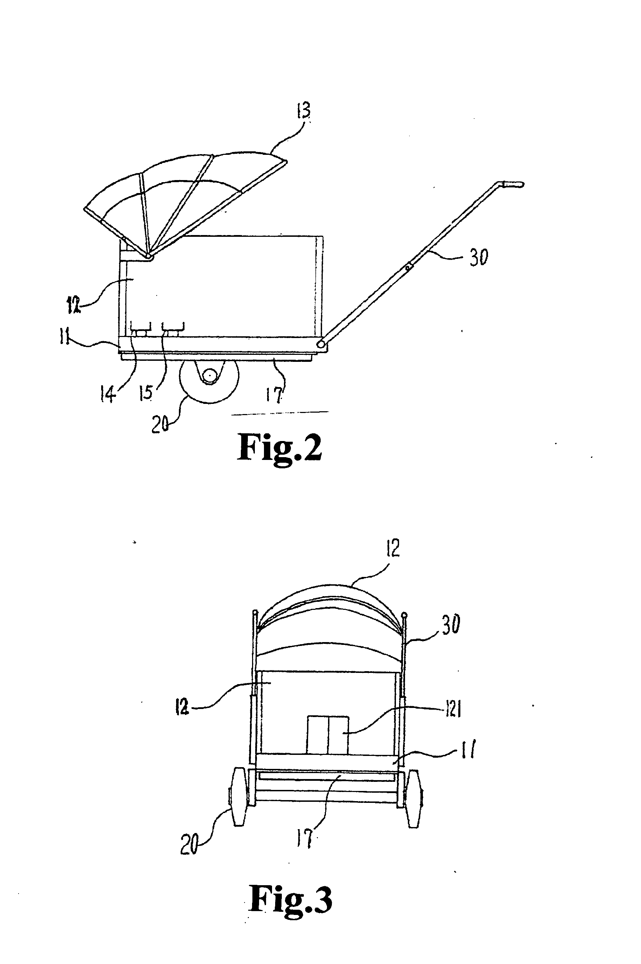

As shown in Figs. 2 to 3, the non-powered environment-protective sightseeing carriage for pets of the present invention is a hand push carriage with two wheels. It comprises floor 11 and wheels 20, four side boards 12 and floor 11 define a compartment, the side boards 12 beside the carriage and the left side board are transparent, pets inside the carriage can view the scene outside. The right side board has a small door, which is two doors opening style 121 for the pets pass in or out. A top cover 13 is on the tops of the side boards 12, which can be turned down for shadow sun light. There are vessels 14 and 15 for food and water on the floor 11. The floor has a hole 16 with a dropping tray 17 under it for storing the dropping from pets temporarily. Two wheels 20 are under the floor 11, the floor 11 has a handle 30 for pushing, which can be a stretching out and drawing back style or folding style.

The non-powered environment-protective sightseeing carriage for pets of the present invention is a hand push carriage with three wheels. It comprises floor 11 and wheels 20; the four side boards 12 and floor 11 define a compartment; the side boards 12 beside the carriage and the left side board are transparent, pets inside the carriage can view the scene outside. The right side board has a small door, which is flood gate style 121 for the pets pass in or out. A top cover 13 is on the tops of the side boards 12, which can be turned down for shadow sun light. There are vessels 14 and 15 for food and water on the floor 11. The floor has a hole 16 with a dropping tray 17 under it for storing the dropping from pets temporarily. Three wheels 20 are under the floor 11, the floor 11 has handle 30 for pushing.

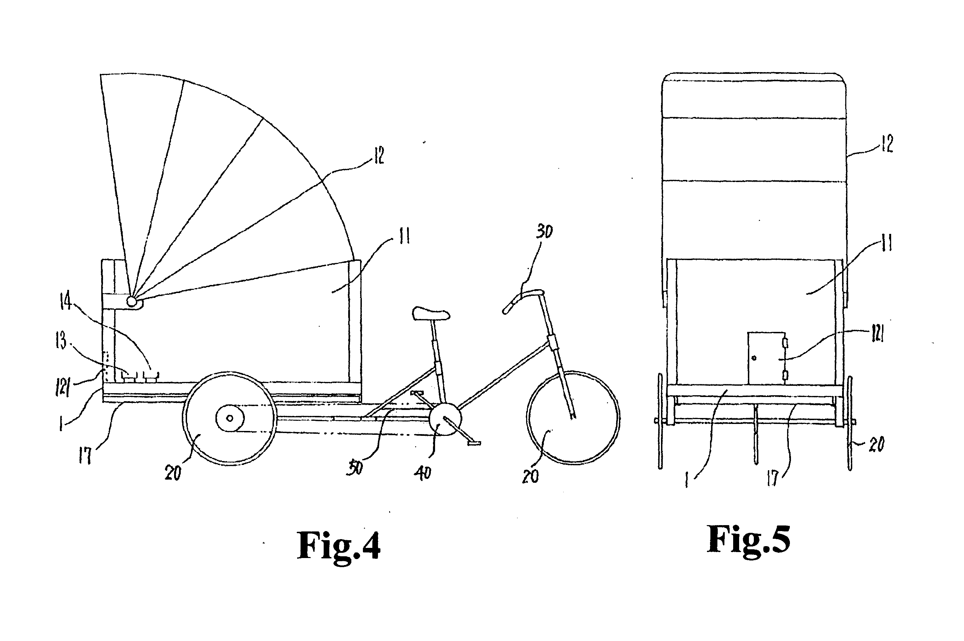

As shown in Figs. 4 to 5, a non-powered environment-protective sightseeing carriage for pets of the present invention comprises floor 11, four side boards 12 and floor 11 define a compartment, at least one of the boards 12 is transparent. A top cover 13 is on the tops of the side boards 12. There are vessels 14 and 15 for food and water on the floor 11. The floor has a hole 16 with a dropping tray 17 under it for storing the dropping from pets temporarily. The floor is connected with the driving device powered by human foot. One of the side boards has a small door 121.

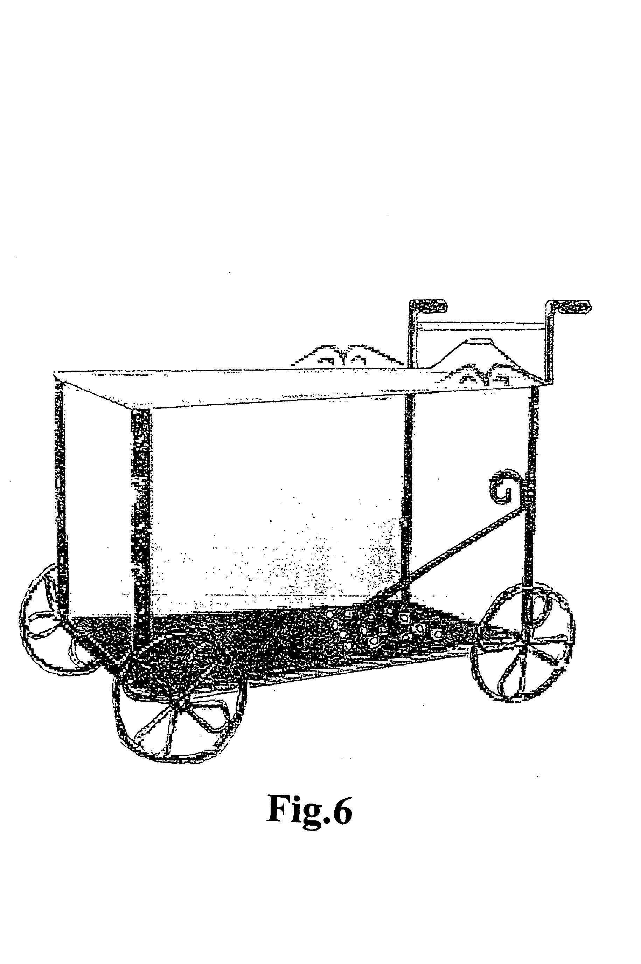

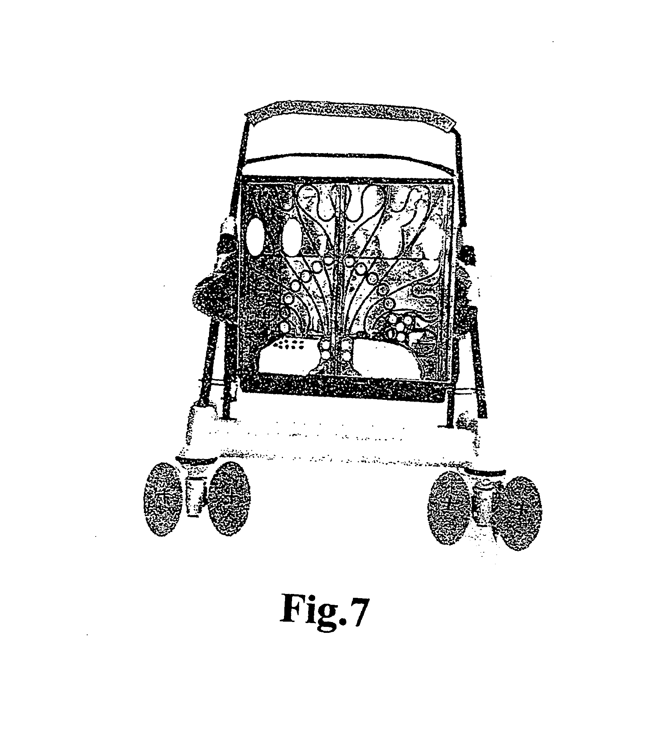

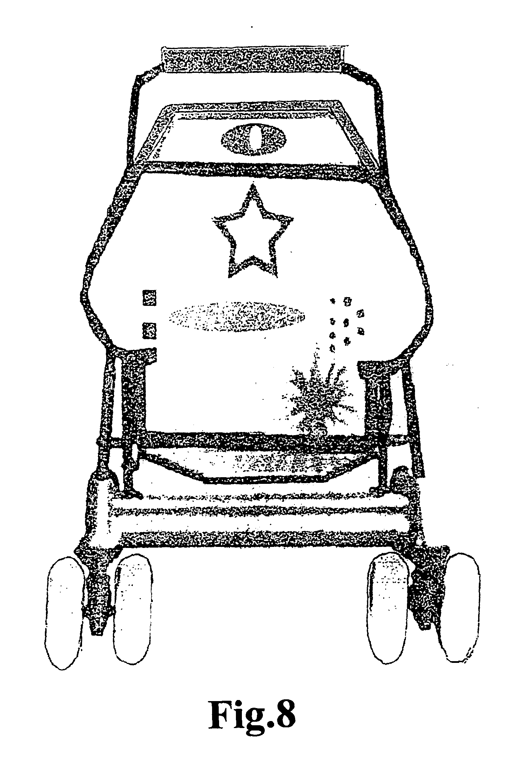

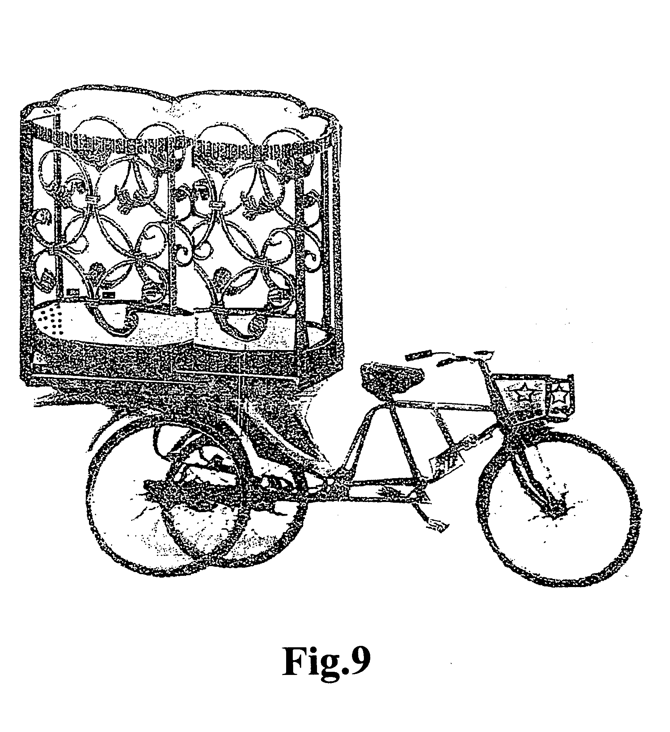

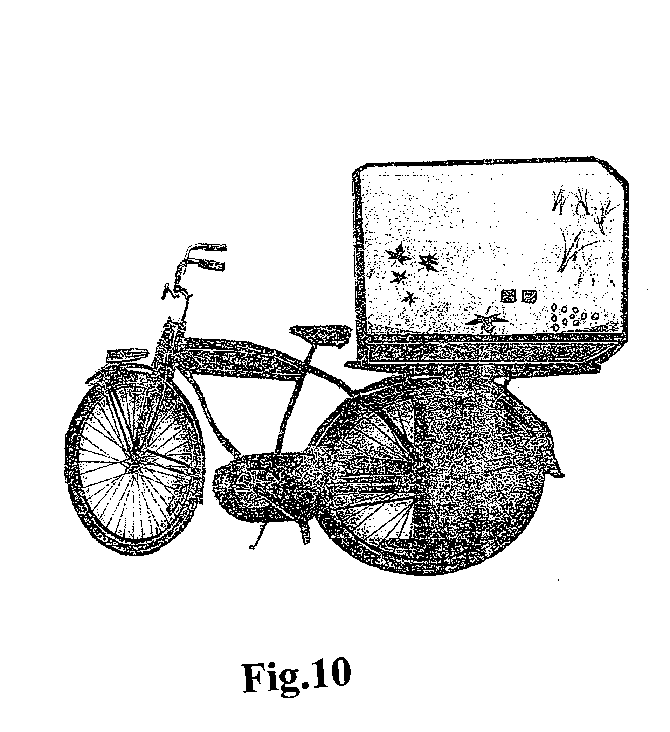

As shown in Figs. 6-11, this invention may be designed in various styles for people bring their pets outdoor while comfortable space is provided for pet's activities.

The carriages in this invention may be foldaway or not foldaway.

When the comportment is large one, it is possible put a board and a chair on floor, so that person may stay in the compartment with his/her pet to look around and play. If the compartment is smaller one, back at home, put a board on floor and obtain a pet's cabinet to store things in it. This will save space and use the compartment sufficiently.

## Claims

1. A non-powered sightseeing carriage for pets comprising a plurality of wheels, a compartment having a floor, a plurality of side boards and a top cover, a plurality of vessels for food and water provided in said compartment, a hole on said floor with a dropping tray under floor, at least one of said side boards being transparent.

2. A carriage according to Claim 1, wherein said Top Cover comprises a transparent material.

3. A carriage according to Claim 1, wherein said Top Cover comprises a non-transparent material.

4. A carriage according to claim 1 , wherein said top cover comprises a transparent materials, and a top tent over said top cover.

5. A carriage according to Claim 1, wherein a Flat Board may be put on said Floor and said Hole.

6. A non-powered environment-protective sightseeing carriage for Pets comprising a compartment defined by a floor, side boards; at least one of said side boards being transparent; a top cover located on the tops of said boards; vessels for food and water provided on said floor; a hole on floor with a dropping tray under floor; at least two wheels fixed under said floor; handled for pushing fixed on said floor.

7. A carriage according to claim 6, wherein one of said a plurality of side boards has a small door, the number of said wheel is three.

8. A non-powered environment-protective sightseeing carriage for Pets comprising a compartment defined by a floor, side a plurality of boards; at least one of said a plurality of side boards is transparent; a top cover located on the tops of said a plurality of boards; a plurality of vessels for food and water provided on said floor; a hole on floor with a dropping tray under it; a driving device powered by human foot fixed under said floor.

9. A carriage according to claim 8, wherein one of said a plurality of side boards has a small door, said driving device has three wheels.

10. A carriage according to claim 8, wherein said driving device is powered by a storage battery.
